# EUROPEAN PATENT APPLICATION

(11) **EP 2 434 395 A1**
(43) Date of publication of application: **28.03.2012**
(21) Application number: 11182659.0
(22) Date of filing: 26.09.2011
(51) Int. Cl.: G06F 9/44, G06F 3/048

(54) **A method to process analytical data, a system for performing the method and a computer program to program a computer to perform the method**

(30) Priority: 30.09.2010 US 388418 P; 28.09.2010 EP 10180804
(71) Applicant: Intervet International BV, 5831 AN Boxmeer (NL)
(72) Inventor: Hendriks, Jos, 5831 AN Boxmeer (NL); Niessen, Ron, 5831 AN Boxmeer (NL)
(74) Representative: Janssen, Paulus J. P.

(57) **Abstract**

The present invention pertains to a method enabling a user to process data, in a system comprising a processing unit for processing the data, the unit being operatively connected to multiple separate analytical devices, each device being constituted to analyse a sample and generate corresponding analytical data of that sample, the analytical data being stored as a data file in a directory corresponding to the device which generated the data, the method comprising initiating processing of the data, the user selecting multiple data files, generated by one or more of the analytical devices, from one or more directories corresponding to the one or more devices, to form a set of data files without actually loading any of the data files, providing the user with an option to preview one or more of the selected data files of the set on a display, after the user has confirmed the selection of data files forming the said set, automatically loading the selected data files from the said one or more directories, and processing the analytical data present in the selected data files to obtain a processed result. The invention also pertains to a system that is constituted to perform the method and to a computer program comprising computer program instructions for programming a computer to perform a method.

## Description

### FIELD OF THE INVENTION

The present invention pertains to a method enabling a user to process data in a system comprising a processing unit for processing the data, the unit being operatively connected to multiple separate analytical devices, each device being constituted to analyse a sample and generate corresponding analytical data of that sample, wherein the analytical data is being stored as a data file in a directory corresponding to the device which generated the data. The invention also pertains to a system that is constituted to perform the method and to a computer program comprising computer program instructions for programming a computer to perform a method.

### BACKGROUND OF THE INVENTION

In the art it is known to process data originating from various independent sources, for example various analytical devices. In particular in labs where biological data is processed, samples are often analyzed by various distinct devices, generating various distinct analytical data, which data are gathered to form a set of analytical data, which set of data is ultimately processed leading to one combined processed result.

There is software available for processing data originating from various independent sources (such as various analytical devices, various software packages etc.). For example the software package Microsoft™ Excel™ allows importation of data files from various directories (the "Import Data" function under "Data/Import External Data"), to allow processing of all imported data to obtain one processed result.

The open source software program Cytoscape™ is a dedicated bio-informatics program also allowing the selection of multiple data files to from a set of data files for a single processing operation to obtain one processed end result.

Both software programs allow to sequentially select a data file and thereafter loading the data for direct execution by the software program. In order to make sure that the user selects the right data file for execution, both Excel™ and Cytoscape™ show at least part of the data in the data file on a display to allow a user to preview the data to be able and decide whether or not he has selected the right data file. If the user confirms that he has selected the right data file, the data file is loaded for direct execution. This means that the data is actually put into a work-sheet of the respective program. After this, the user may select another data file for importation, which data file can be selected from any directory to which the computer on which the software is running is operatively connected. After selection, at least part of the data of the new file is shown on the same display to allow the user to preview the data. These operations are repeated until the user has selected all data files he wants to be processed as a set by the software.

Similar software is known from Mathworks™ for example MatLab™ and BioInformatics Toolbox™.

Although the known software enables the formation of a proper set of data files for processing as a set, it has several important disadvantages, in particular for professional environments were users are used to good laboratory practice (GLP, GMP) standards. First of all, with the existing software users are forced to go through a preview for every selection they make. This is very inconvenient for users that are used to giving logical unique names to data files such that the chance of erroneous selection is brought to a minimum anyway. Moreover, the existing software packages inherently force users to sequentially select data files, even if the files are present in one directory. Each file has to be previewed and its selection confirmed, before a following data file can be selected. Next to all this, the fact that each data file has to be loaded immediately after its selection means that there is a severe risk of unnecessary data transport. For example, suppose that a user wants to compile a set of twenty data files. He sequentially selects, confirms and loads those files. If however something goes wrong with the last data file (e.g. it cannot be found or was erroneously erased before), the preceding loading of nineteen data files has become useless. Not only did this take user's time, but also it took data transport capacity. Also, the removing of the nineteen files from the local memory will take computer time and capacity.

It is noted that Alex Nichol in "Burning CDs in Windows XP", 3 august 2003, pages 1-4, XP002626256 describes a method to process data obtained from multiple data files stored in multiple directories. In this method all data files are automatically loaded upon selection. The user may preview one or more of the data files before actual processing.

### SUMMARY OF THE INVENTION

It is an object of the present invention to overcome or at least mitigate the disadvantages of prior art methods, systems and computer programs as described here-above. To this end a method has been devised comprising initiating processing of the data, the user selecting multiple data files, generated by one or more of the analytical devices, from one or more directories corresponding to the one or more devices, to form a set of data files without loading any of the selected data files, providing the user with an option to preview one or more of the selected data files of the set on a display, and only after the user has confirmed the selection of data files forming the said set, automatically loading the selected data files from the said one or more directories, and processing the analytical data present in the selected data files to obtain a processed result.

With this method, the user may firstly select multiple data files, even if present in multiple distinct directories to form the set of data files. He can select one or more data files in a first directory (optionally by selecting multiple data files at a time in this one directory) and then proceed to one or more another directories for completion of the set. In this respect it is noted that "selecting" needs to be no more than merely indicating the name of a specific data file without actually loading that file. After completion of the set (not excluding intermediate preview during completion of the set) he is provided with the option to preview one or more of the files he selected. It is thus not an obligation, but may be used only in those circumstances where the user is not 100% sure he made the right selection. Only after the user has confirmed that his selection is OK, the corresponding data files from the various directories are automatically loaded (i.e. without an operating having to intervene in the actual loading process) for execution. This novel method overcomes or at least mitigates all of the disadvantages of the known software as described here-above. The invention also pertains to a system that is constituted to perform the method. For this, the system comprises a processing unit for processing the data, multiple analytical devices operatively connected to the processing unit, each device being constituted to analyse a sample and generate corresponding analytical data of that sample, and having a directory corresponding to that device to store the data in a data file, initiating means to initiate the processing of the data, a selecting function to allow a user of the system to select multiple data files from one or more directories corresponding to one or more of the said multiple devices, to form a set of data files, a preview function that provides the user with an option to preview one or more of the selected data files of the set on a display, a tool for confirming the selection of data files forming the said set by a user, a loading tool for automatically loading the selected data files from the said one or more directories when the selection of the set is confirmed, to allow the processing of the data to obtain a processed result.

As mentioned, the new method has particular advantages in professional environments such as analytical laboratories were people are used to work according to high standards, but the present invention may also have useful application in other environments such as SOHO, entertainment and various professional environments. The invention is thus also embodied in a computer program (optionally stored on a storage medium such as a DVD, USB-stick, hard-disk, magnetic tape etc.) comprising computer program instructions for programming a computer to perform a method for processing data, the data being present in data files distributed over multiple independent directories operatively connected to the computer, the method comprising execution of the computer program instructions to initiate processing of the data, a user selecting multiple data files from one or more of the said directories to form a set of data files, providing the user with an option to preview one or more of the selected data files of the set on a display, and after the user has confirmed the selection of data files forming the said set, automatically loading the selected data files from the said directories, and processing the data present in the selected data files by the executed computer program instructions to obtain a processed result.

### DEFINITIONS

To *process* means to perform operations on data, this includes conversion of data, new arrangements of data, extraction of sub-data, comparison of data etc.

A *processing unit* is a device suitable for performing computer program instructions.

A *computer* is a device comprising a processing unit, such as a laptop computer, a desk top computer, a handheld computer, a mobile phone, a workstation (keyboard plus display) combined with a remote server, etc.

A *computer program* is a set of executable computer program instructions, also known as software.

*Data* is numerical or other information represented in a form suitable for processing by computer.

A *data file* (or simply "file") is a computer file that contains any type of data, including a word processing document, spreadsheet, records, etc. It is stored as a unit in a memory with a single name.

*A directory* is a simulated file folder on a storage device (such as a disk, tape, stick, DVD etc) comprising a listing of the files contained therein.

To *select* a data file is to indicate the name of a specific data file, for example by indicating the name in a computer directory.

To *load* is to copy an item from a source into a memory for direct execution by a computer program.

To *preview* a data file is to view at least part of the file by a user, typically on a display, before loading the file.

### EMBODIMENTS OF THE INVENTION

In an embodiment of the method according to the invention the analytical data is biological data. In particular when biological data (such as analytical data of human or veterinary samples, e.g. blood, serum, gastro-intestinal swabs, or plant samples) is concerned the user typically has a high professional standard. This often means that names of data files are logically chosen, and all steps in procedures, even data processing procedures, follow the rules of good laboratory practice. This means that these users only occasionally feel or have the need to preview selected data files when compiling a set of data files for processing. In this environment therefore the present methods provides an easy workflow, convenient compiling of sets of data files and still lead to a very high reliability of data file set formation.

In an embodiment the method allows the user to deselect a data file which has been previewed. This embodiment provides the additional advantage that one single data file can be deselected when found wrong for whatever reason. This prevents that the user has to start the complete selection process all over again. Although in the present method selection takes only very little time (since there is no obligatory preview and also, multiple data files in one directory can be selected simultaneously), it has found to be very convenient that one single data file can be deselected from the set.

In another embodiment the method allows a user to preview the whole content of the data files. At first glance this embodiment seems to contradict the object of convenience. Indeed, for many types of data files, previewing only part of the content is sufficient for a user to decide whether or not he made the proper selection. Applicant however has recognised that in particular for data pertaining to analytical data of biological samples, often the major part of data files is either the same for different samples or at least has a high resemblance. In order to further improve the current method, it has found to be advantageous to allow the user to preview the whole content of the data file, if needed.

In an embodiment of the system according to the invention each analytical device has a local memory comprising the said corresponding directory for storing the data files generated by the said analytical device. Although the directories of the devices could for example be located on one central processing unit, it has found to be contributing to easy of compiling a set of data files when the directories are comprised in the local memories of the analytical devices. One would think that a system wherein all directories are comprised in one central memory would make compiling a set easier, but in particular in an environment such as an analytical lab this has not found to be the case. A user namely is used to collecting data from each of the respective devices and the system of this embodiment adapts to this use. Given the fact that the user can easily navigate to the various directories via the processing unit that is operatively coupled (either wired or wire-less) to each of the devices and their directories, there is no noticeable speed lost in compiling a set of data files and reliability increases significantly since this system adopts to existing working methods.

In an embodiment of the computer program of the present invention (either as such, or when present on a data carrier) the computer program instructions are such that the method allows the user to deselect a data file which has been previewed. The advantages of this embodiment have been described here-above.

In another embodiment of the computer program the computer program instructions are such that the method generates a preview without the need to execute additional computer program instructions. In the prior art, for actually previewing the content of a data file, often the program (software) that originally generated the data) has to be run in order to view the data. This may take some time which is inconvenient when compiling for example a large set of data files. It has been found that a preview without the need to run such additional software overcomes this problem. In this embodiment, it might be that the format of the preview is not the same as would be when the additional software would have been used. Still, for preview purposes this has found to be no principal problem.

### EXAMPLES OF THE INVENTION

Figure 1 schematically shows a system according to the invention.
Figure 2 is a diagram showing parts of the system according to the invention.
Figure 3 is a flow chart showing one embodiment of the method according to the invention.

### Figure 1

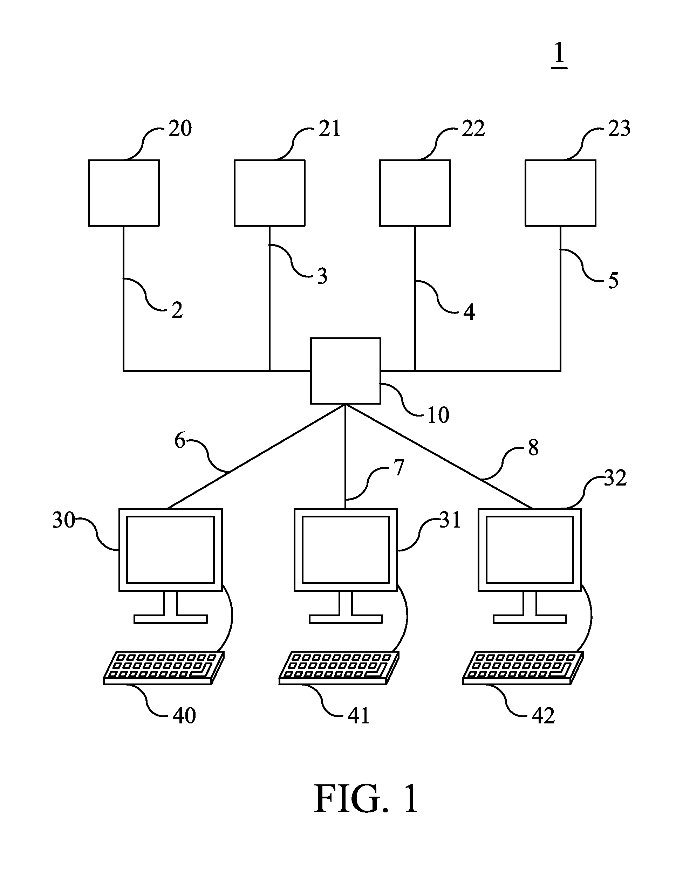

Figure 1 schematically shows a system 1 according to the invention. The system in this particular embodiment is comprised of a server 10, which server is connected via network cables 2, 3, 4 and 5 to analytical devices 20, 21, 22 and 23 respectively. In an alternate embodiment (not shown), the connection between the devices and the server is a wireless connection. To the server three workstations 30, 31 and 32 are connected, each station comprising a display and a keyboard (40, 41 and 42 respectively). The server in this embodiment is programmed with computer program instructions to allow a user present at a workstation, to process analytical data generated by one or more of the analytical devices 20, 21, 22 or 23.

### Figure 2

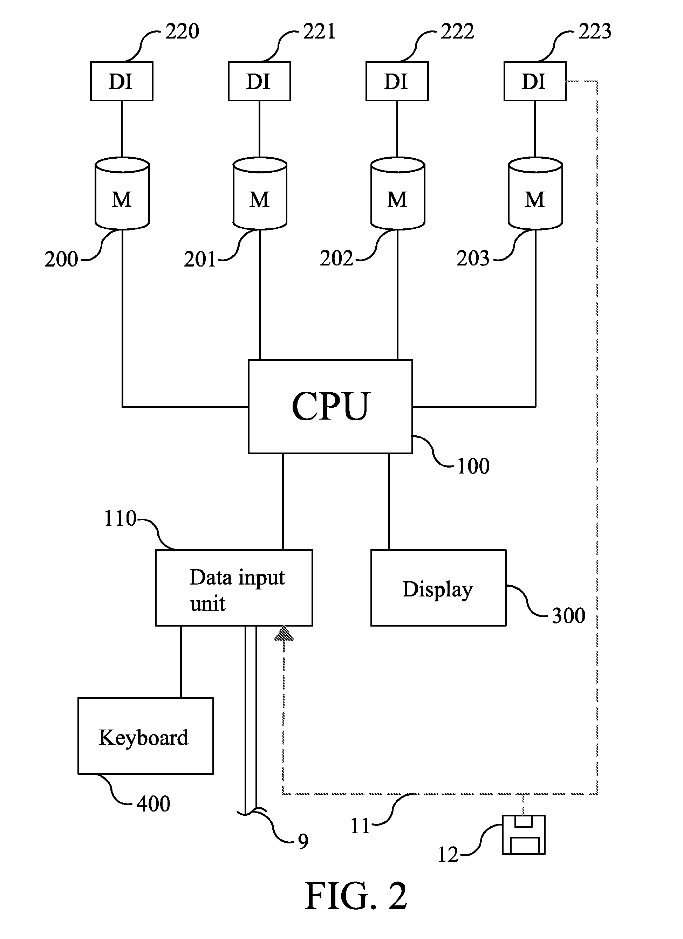

Figure 2 is a diagram showing parts of the system according to the invention. In this embodiment, which corresponds to the system as depicted in Figure 1. Shown is a central processing unit (CPU) 100 which in this embodiment is comprised in server 10 (see Figure 1). The CPU is connected to four memories 200, 201, 202 and 203. These memories are local memories present in devices 20, 21, 22 and 23 respectively. The memories each comprise one or more directories in which data files are stored generated by the respective corresponding device. To write data into these directories, each device comprises a data input unit, indicated as 220, 221, 222 and 223 respectively.

In Figure 2, part of workstation 30 are also shown (the corresponding parts of workstations 31 and 32 are not shown in figure 2). Workstation 30 comprises a display 300 and a data input unit 110 for providing data to CPU 100. Such data might for example be choices made by a user, which a user may indicate via keyboard 400 (optionally the data input unit may comprise a voice recognition unit or other means to enable a user to input data). The data input unit 110 is also connected to an external network cable 9, e.g. to enable loading of data (e.g. computer program instructions, analytical data, text documents etc.) from this network. In an embodiment (not shown), the network cable 9 is connected to one or more of the devices to provide an additional means for operative connection between any of the devices and the CPU 100. Another alternative form of an operative connection between any of the devices and the CPU is shown as dashed line 11, which represents data carried on a data carrier (such as a USB-stock, DVD or floppy disk 12), and transported from data input unit 223 (which wrote the data on the carrier) to data input unit 110 which comprises a reader (not shown) for the carrier used. Such a carrier (also known as a storage medium), could also be used to store the computer program instructions to allow the system to perform the method of the present invention.

### Figure 3

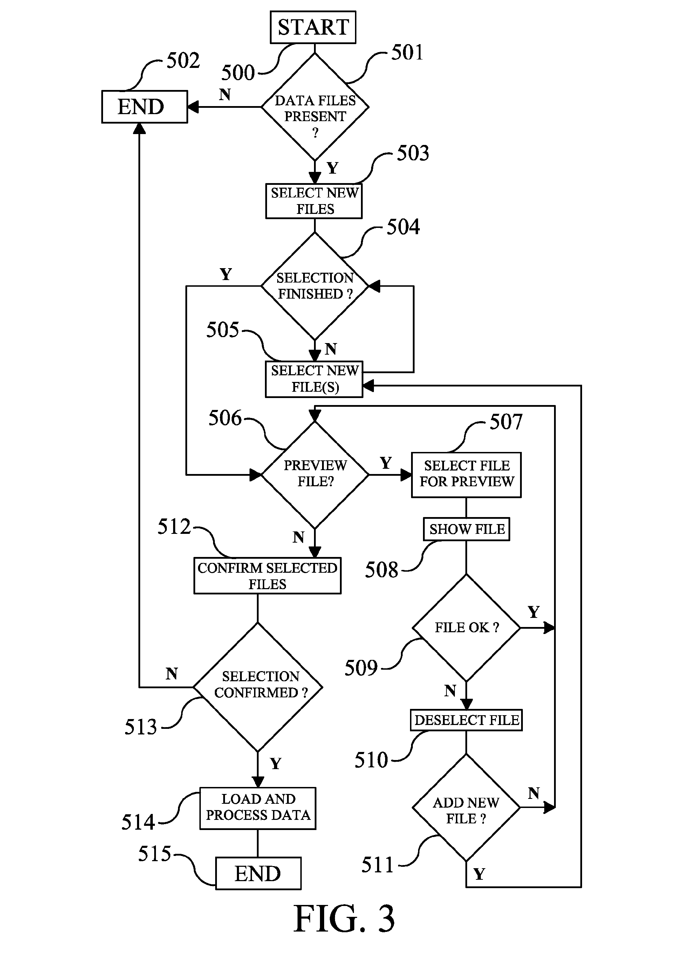

Figure 3 is a flow chart showing one embodiment of the method according to the invention. In step 500 the process of the data is initiated, typically by executing the program instructions present on CPU 100 (see figure 2). In step 501 it is automatically checked whether any data files are present in a directory that is operatively connected to the CPU. If not, the process is ended in step 502. If data files are present, the user in step 503 selects one or more files from a directory corresponding to one of the analytical devices. In step 504, it is established whether or not the selection has finished. In this case, it is the user who asks himself that question. If the question is answered in the negative, one ore more new files are selected in step 505 from the same or an alternate directory. After that, it is again established whether or not the selection process is finished. If so, in step 506 he question is posed whether or not the user would like to preview the contents of a file (in this embodiment by providing a selectable button denoted "View" on the display 300, see figure 2, button not shown). If yes, the user selects a file for preview in step 507 by using the button "View". This automatically leads the CPU to show the contents of the data file on display 300 in step 508. In step 509 the question is asked whether the previewed file is OK. If the file is found OK by the user, the question whether or not the user would like to preview the contents of a (next) file is posed again (step 506) and the preview process may be repeated. If the originally selected file is found to be not OK by the user, he may deselect the file in step 510. After that, the question is asked whether the user would like to add a new file in step 511, for example to replace the deselected file. If answered in the negative, the question whether or not the user would like to preview the contents of a (next) file is posed again in step 506 and the preview process may be repeated. If a new file is to be added, the process goes back to step 505 and a new file (or files) may be selected.

If it is decided in step 506 that no more files need to be previewed, the selection of the files may be confirmed in step 512. The CPU checks in step 513 whether the selection is confirmed. If not, the process is ended in step 502. If the selection is confirmed, in step 514 the data corresponding to the selected data files is automatically loaded for direct execution and the corresponding data is processed to generate a processed result. After that, the process is ended in step 515.

## Claims

1. A method enabling a user to process data, in a system comprising a processing unit for processing the data, the unit being operatively connected to multiple separate analytical devices, each device being constituted to analyse a sample and generate corresponding analytical data of that sample, the analytical data being stored as a data file in a directory corresponding to the device which generated the data, the method comprising
- initiating processing of the data,
- the user selecting multiple data files, generated by one or more of the analytical devices, from one or more directories corresponding to the one or more devices, to form a set of data files without loading any of the selected data files,
- providing the user with an option to preview one or more of the selected data files of the set on a display,
- after the user has confirmed the selection of data files forming the said set, automatically loading the selected data files from the said one or more directories, and
- processing the analytical data present in the selected data files to obtain a processed result.

2. A method according to claim 1, **characterised in that** the analytical data is biological data.

3. A method according to any of the preceding claims, **characterised in that** the method allows the user to deselect a data file which has been previewed.

4. A method according to any of the preceding claims, **characterised in that** the method allows a user to preview the whole content of the data files.

5. A system for processing data, the system comprising:
- a processing unit for processing the data,
- multiple analytical devices operatively connected to the processing unit, each device being constituted to analyse a sample and generate corresponding analytical data of that sample, and having a directory corresponding to that device to store the data in a data file,
- initiating means to initiate the processing of the data,
- a selecting function to allow a user of the system to select multiple data files from one or more directories corresponding to one or more of the said multiple devices, to form a set of data files without loading any of the selected data files,
- a preview function that provides the user with an option to preview one or more of the selected data files of the set on a display,
- a tool for confirming the selection of data files forming the said set by a user,
- a loading tool for automatically loading the selected data files from the said one or more directories when the selection of the set is confirmed, to allow the processing of the data to obtain a processed result.

6. A system according to claim 5, **characterised in that** each analytical device has a local memory comprising the said corresponding directory for storing the data files generated by the said analytical device.

7. A computer program comprising computer program instructions for programming a computer to perform a method for processing data, the data being present in data files distributed over multiple independent directories operatively connected to the computer, the method comprising:
- execution of the computer program instructions to initiate processing of the data,
- selection of multiple data files from one or more of the said directories by a user of the computer program without loading any of the selected data files, to form a set of data files,
- providing the said user with an option to preview one or more of the selected data files of the set on a display, and
- after the user has confirmed the selection of data files forming the said set, automatically loading the selected data files from the said directories, and
- processing the data present in the selected data files by the executed computer program instructions to obtain a processed result.

8. A computer program according to claim 7, **characterised in that** the computer program instructions are such that the method allows the user to deselect a data file which has been previewed.

9. A computer program according to claim 7 or 8, **characterised in that** the computer program instructions are such that the method generates a preview without the need to execute additional computer program instructions.

10. A computer program storage medium storing the computer program of any of the claims 7 to 9.
